# EUROPÄISCHE PATENTSCHRIFT

(11) **EP 3 038 789 B1**
(45) Veröffentlichungstag und Bekanntmachung des Hinweises auf die Patenterteilung: **05.07.2017**
(21) Anmeldenummer: 13755936.5
(22) Anmeldetag: 27.08.2013
(51) Int. Cl.: B23K 26/26, B23K 26/08, B23K 37/04

(54) **VERFAHREN ZUM KONTINUIERLICHEN TRANSPORTIEREN UND STUMPFEN VERSCHWEISSEN VON BLECHTEILEN UND EINE ANWENDUNG DES VERFAHRENS**
METHOD FOR CONTINUOUSLY CONVEYING AND BUTT-WELDING SHEET METAL PARTS, AND USE OF SAID METHOD
PROCÉDÉ DE TRANSPORT EN CONTINU ET DE SOUDAGE BOUT À BOUT DE PIÈCES EN TÔLE ET APPLICATION DU PROCÉDÉ

(43) Veröffentlichungstag der Anmeldung: 06.07.2016
(73) Patentinhaber: Andritz Soutec AG, 8413 Neftenbach (CH)
(72) Erfinder: STÄUBLI, Daniel, CH-5430 Wettingen (CH); CLERC, Jean-Frédéric, CH-8180 Bülach (CH); JANETT, Andri, CH-8406 Winterthur (CH)
(74) Vertreter: Schalch, Rainer
(86) Internationale Anmeldenummer: PCT/CH2013/000152
(87) Internationale Veröffentlichungsnummer: WO 2015/027346

(56) Entgegenhaltungen:
- EP-A1- 0 743 133
- EP-A1- 1 110 662
- EP-B1- 0 817 698
- JP-A- 2007 283 337

## Beschreibung

Die vorliegende Erfindung betrifft ein Verfahren zum kontinuierlichen Transportieren und stumpfen Verschweissen von Blechtafeln insbesondere im Karosseriebau der Automobil-Industrie nach dem Oberbegriff von Anspruch 1 sowie eine Anwendung des Verfahrens.

Zur Herstellung von Blechteilen im Karosseriebau werden moderne Fertigungsverfahren angewendet, welche aus einzelnen Blechtafeln - allenfalls nach Blechkantenvorbereitung - geschweisste Teile, sogenannte Tailored Blanks herstellen. Bei bekannten Schweissverfahren, insbesondere beim Laserschweissen, gibt es zwei bekannte Methoden. Bei einer ersten Methode werden Blechtafeln exakt positioniert, gespannt und von einem beweglichen Schweisskopf nicht kontinuierlich verschweisst. Beim anderen Verfahren werden Blechtafeln aus zueinander verschränkten Bahnen kommend einem ortsfesten Schweisswerkzeug zugeführt und verschweisst. Beide Methoden erfordern einen hohen Aufwand an die mechanische Präzision, um eine Spaltbreite von etwa 0.15 mm zu erreichen. In der Patentschrift US5328083 ist ein Verfahren und eine Vorrichtung zur Durchführung des Verfahrens beschrieben, wobei aber nicht offenbart wird, wie die genaue Positionierung des Schweisswerkzeuges im Vergleich zum aktuellen Nahtverlauf erfolgt. Dabei können Ungenauigkeiten der Platinen und Positionsverschiebungen des Nahtverlaufes zu fehlerhaften Schweissnähten führen.

Beim Schweissen entsteht durch die heisse Schweissnaht eine Kraft, und diese bewirkt wiederum, dass am Ende der Schweissnaht ein Spalt entsteht. Um diesen Effekt zu vermeiden muss das Blech mit einer hohen Kraft gehalten oder die Schweissnaht muss unmittelbar nach dem Schweissen in der Regel mit Wasser gekühlt werden. Zu diesem Zwecke ist eine Regelvorrichtung und eine Kühleinrichtung vorgesehen, was insgesamt allerdings einen beträchtlichen apparativen Aufwand bedingt und deshalb die Investitionskosten einer solchen Tailored Blank Schweissmaschine massiv verteuert.

Die Europäischen Patenschrift EP 0450349 betrifft ein Verfahren zum kontinuierliche Verschweissen von auf Stoss geführten Bändern oder Blechen ohne Zuführung von Zusatzwerkstoffen mittels eines Laserstrahls, wobei die Bänder im Bereich der Schweissnaht in Bandlaufrichtung unmittelbar hinter dem Schweissfokus gekühlt werden in Abhängigkeit der Breite des von den Stosskanten gebildeten Spaltes. In dieser Publikation wird auch eine Vorrichtung zum kontinuierlichen Verschweissen von auf Stoss geführten Blechen oder Bändern mittels eines ortsfesten Laserstrahls vorgeschlagen, mit an beiden Seiten der zu verschweissenden Bänder paarweise senkrecht zu deren Laufrichtung angeordneten Spannrollen, die im Bereich des Stosses der Bänder einen Spalt bilden, durch den der ortsfeste Laserstrahl beim Verschweissen der Stosskanten trifft.

In der Europäischen Patentschrift EP 0817698 B1 wird ein Verfahren zum kontinuierlichen Stumpfnahtschweissen von Blechtafeln beschrieben, bei welchem die relative Lage der Blechtafeln und damit die Genauigkeit der Nahtfuge innerhalb eines vorgegebenen Toleranzbereiches eingehalten wird. Dabei wird bewusst auf eine mechanisch präzise Ausrichtung der miteinander zu verschweissenden Bleche verzichtet und stattdessen wir das Strahlwerkzeug mittels Sensorik zum fortlaufenden Ermitteln der Spaltbreite dem Blechstoss der beiden Blechtafeln nachgeführt. Im Weiteren kann mit einem Regelkreis die Leistung des Schweissstrahls und die erforderliche Kühlleistung für den Schweissprozess (Gas, Wasser) permanent angepasst werden. Ein solches System bedarf eines hohen Wartungsaufwandes.

Eine Herausforderung beim Schweissen von Tailored Blanks ist jeweils das Spannen der Platinen. Diese Herausforderung wird je nach Maschinenkonzept unterschiedlich gelöst. Einerseits kann - wie weiter oben erwähnt - bei einer Durchlaufanlage die Schweissnaht unmittelbar nach dem Schweissen gekühlt werden. Anderseits sind auch Verfahren bekannt, wobei die Platinen zwischen zwei Ketten eingespannt werden. Nachteilig bei einer solchen Maschine sind die fehlende Zugänglichkeit von oben sowie die Verschmutzungsproblematik durch Schweissrückstände der Maschine. Insbesondere beim Schweissen von Platinen mit einem nicht rechteckigen Grundriss (beispielsweise 3-eckiger oder 5-eckiger Grundriss) entstehen nichtproduktive Totzeiten zwischen dem Schweissen von zwei Schweissnähten, was einen nachteiligen Einfluss auf die Zykluszeit der Maschine und damit auch auf die Produktionskosten bewirkt.

Als weitere Möglichkeit für ein prozesssicheres Spannen ist das Spannen von Platinen auf statischen Magneten zu erwähnen. Um den hohen Taktzeitanforderungen einer solchen Anlage zu genügen, müssten diese Magnet-Shuttles aber rotierend bewegt werden und für das Beladen und Entladen der Platinen müssten Elektromagnete eingesetzt werden. Somit müsste die Energieversorgung zu einem rotierenden System sichergestellt werden, eine technische Herausforderung mit entsprechend hohen Investitionskosten.

Wichtige Kriterien in einem Verfahren zum Schweissen von Tailored Blanks sind einerseits der Durchsatz der gesamten Anlage, das heisst wie viele Teile pro Stunde hergestellt werden können, und anderseits der Aufwand, um sowohl die Qualität des gesamten Verarbeitungsprozesses als auch die gewünschte Qualität der geschweissten Platinen mit vernünftigem technischem Aufwand sicherstellen zu können.

Nachteilig an den vorab erwähnten Lösungen sind der hohe technische Aufwand für das Kühlen der Schweissnaht, für das prozesssichere Spannen der Bleche, für das Abführen von Schweissrauch und Schweissspritzer aus der Anlage sowie die Kapazität und somit die Produktivität der Gesamtanlage. Im Allgemeinen ist bei solchen Anlagen entweder die Schweissoptik als fahrbar ausgelegt und die zu verschweissenden Platinen ruhen oder aber das Schweissgut wird kontinuierlich zugeführt und die Schweissoptik ist während dem Schweissprozess ortsfest. Nachteilig ist im Weiteren der nicht unerhebliche Aufwand für das Beladen und das Entladen der Transportbänder.

Der vorliegenden Erfindung liegt daher die Aufgabe zu Grunde, ein Verfahren anzugeben, bei dem die vorstehend genannten Nachteile eliminiert werden.

Diese Aufgabe wird durch die in Anspruch 1 angegebenen Merkmale gelöst. Vorteilhafte Ausführungsvarianten sind in den abhängigen Ansprüchen angegeben.

Die hier vorgestellte Erfindung ermöglicht die effiziente und prozesssichere industrielle Herstellung von Tailored Blank Teilen in einem kontinuierlichen Verfahren, wobei die Platinen mittels einem magnetischen Prinzip nur von einer Seite - von unten - gespannt werden, womit die Zugänglichkeit zur Maschine von oben gewährleistet ist.

Dies hat einen positiven Einfluss auf die Wartungsfreundlichkeit der Maschine, da der entstehende Schweissrauch und Schweissspritzer einfach von oben abgeführt werden können. Da die Platinen über eine längere Transportstrecke prozesssicher fixiert werden, kann eine fahrbare oder "fliegende" Optik eingesetzt werden, wodurch die Kapazität der Maschine im Vergleich zu anderen Maschinen mit herkömmlichen Konzepten um bis zu 40% erhöht werden kann. Das Beladen und Entladen der Maschine ist mittels Elektromagneten möglich und im Weiteren wirkt sich das magnetische Halteprinzip positiv aus auf das Einhalten eines möglichst kleinen Spaltes zwischen den zu verschweissenden Platinen, womit eine bessere Qualität der Schweissnaht erreicht werden kann. Insgesamt ergibt sich ein vereinfachtes Maschinenkonzept der ganzen Anlage.

Insgesamt ergibt sich mit dem vorgestellten Verfahren somit eine bessere Produktivität im Vergleich zu anderen bekannten Verfahren.

Die vorliegende Erfindung wird im Folgenden anhand von Ausführungsbeispielen unter Bezugnahme auf Zeichnungen weiter erläutert. Dabei zeigen:
- Fig. 1: eine schematische Darstellung einer erfinderischen Anlage mit Transportbändern im Querschnitt,
- Fig. 2: eine erste Draufsicht auf die mit Platinen bestückten Transportbänder der erfinderischen Anlage bei Schweissbeginn, wiederum in schematische Darstellung,
- Fig. 3: eine zweite Draufsicht auf die mit Platinen bestückten Transportbänder der erfinderischen Anlage beim Schweissen, wiederum in schematische Darstellung,
- Fig. 4: eine dritte Draufsicht auf die mit Platinen bestückten Transportbänder der erfinderischen Anlage bei Schweissende, wiederum in schematische Darstellung und
- Fig. 5: eine vierte Draufsicht auf die mit Platinen bestückten Transportbänder der erfinderischen Anlage bei Rückfahrt der Schweissoptik, wiederum in schematische Darstellung.

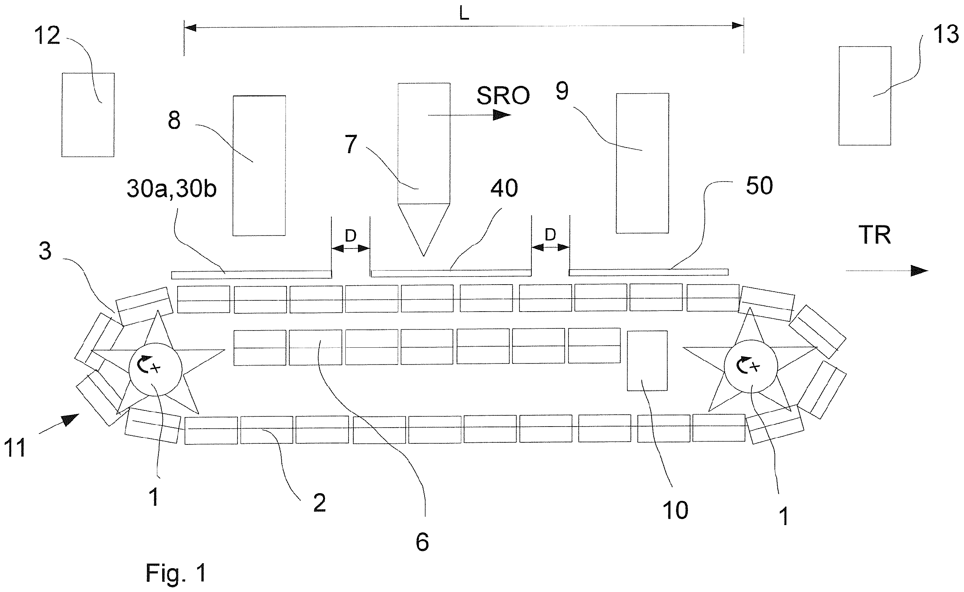

Fig. 1 zeigt einen Magnetkettenförderer 11 mit dem über die Antriebsritzel 1 in Transportrichtung TR bewegbaren endlosen Transportband 3, dessen Geschwindigkeit V_{TR} im Bereich von 1 - 30 m/min liegt, und dessen Segmente 2, die vorzugsweise aber nicht ausschliesslich als umlaufende Polplatten ausgelegt sind, auf einer Länge L eine flache Ebene bilden, auf der in einem ersten Prozessschritt mittels Zuführmittel 12 magnetisierbare Einzelwerkstücke 30a,30b platziert und durch vorzugsweise magnetische Haltemittel 6 auf dem Transportband 3 mit hoher Kraft festgehalten werden, wobei ein ortsfestes erstes Qualitätssystem 8 zur Überwachung der Position und der Spaltbreite der zu verschweissenden Einzelwerkstücke 30a,30b dient. Der Abstand D zwischen den Platinen 30a,30b,40,50 ist abhängig vom Grundriss der zu verschweissenden Einzelwerkstücke 30a,30b, wobei D bei rechteckigem Grundriss der Einzelwerkstücke 30a,30b klein gehalten werden kann und bei beispielsweise rhombenförmigem Grundriss der Einzelwerkstücke 30a,30b grösser gewählt werden muss. In einem zweiten Prozessschritt werden die Einzelwerkstücke 30a,30b mittels der bewegbaren Schweissoptik 7 in Schweissrichtung SRO stoffschlüssig miteinander zu einer geschweissten Platine 50 verbunden, wobei die Beschaffenheit der Schweissnaht mit einem zweiten ortsfesten Qualitätssystems 9 von oben und optional mit einer zusätzlichen ortsfesten Kamera 10 von unten überprüft wird. Wenn das Band die Wegstrecke L zurückgelegt hat, wird die geschweisste Platine 50 in einem dritten Prozessschritt mittels Mitteln 13 zum Entfernen geschweisster Platinen nach vorgängigem Lösen der Haltemittel 6 vom kontinuierlich laufenden Transportband 3 entnommen.

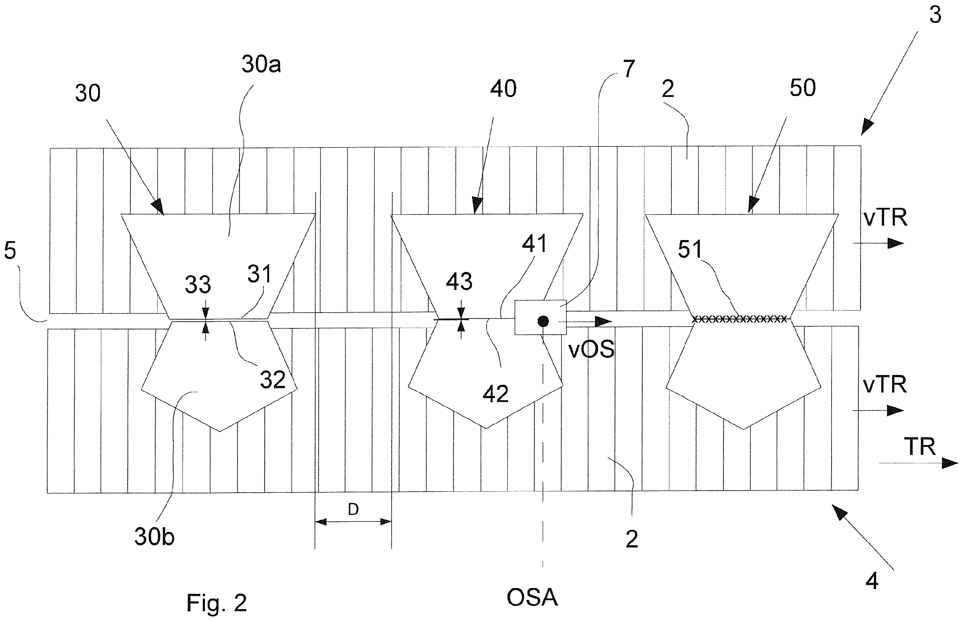

Die Fig. 2 zeigt in einer ersten Draufsicht den Start des Schweissprozesses. Die beiden durch einen Spalt 5 voneinander getrennten, je aus den Segmenten 2 bestehenden Transportbänder 3,4 die sich beide mit derselben Geschwindigkeit V_{TR} kontinuierlich in Transportrichtung TR bewegen. Die Platine vor dem Schweissen 30, bestehend aus den zu verschweissenden Einzelwerkstücken 30a,30b unter Bildung eines möglichst kleinen Spaltes 33, ist im Bereich der Kanten 31,32 auf den Transportbändern 3,4 fixiert.
Die sich in Bearbeitung befindliche Platine 40 weist im Bereich der Kanten 41,42 einen - bedingt durch die Zuschnittstoleranz - vorhandenen minimalen Spalt 43 auf und die Schweissoptik 7 ist in der Anfangsposition OSA positioniert. Die bereits fertig verschweisste Platine 50 ist mit einer Schweissnaht 51 versehen und kann in einem nächsten Prozessschritt von den Transportbändern entfernt werden.

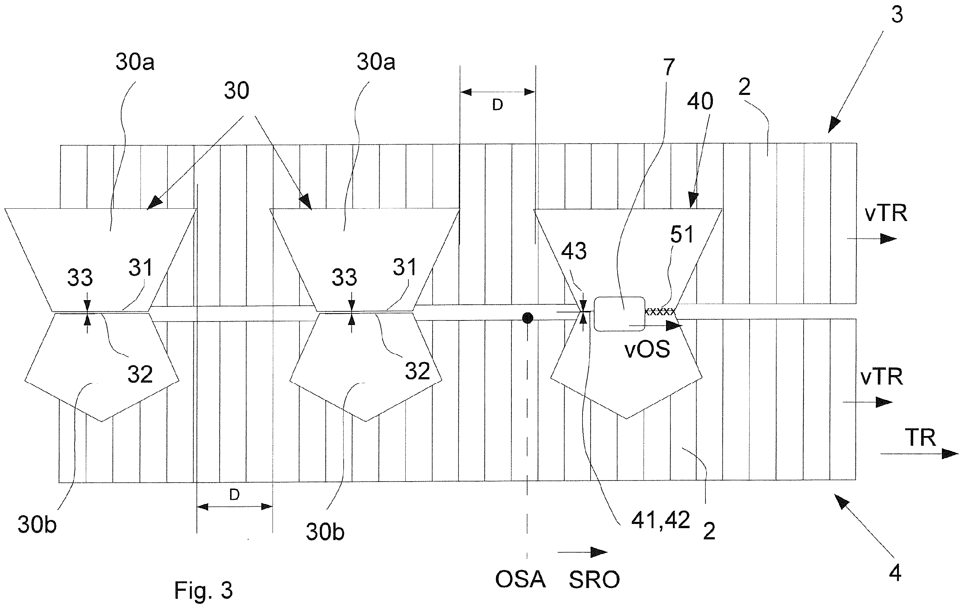

Die Fig. 3 zeigt in einer zweiten Draufsicht den Schweissprozesses. Die Schweissoptik 7 bewegt sich mit der Geschwindigkeit V_{OS} = V_{TR} - V_{S} in der gleichen Richtung SRO wie die Transportrichtung TR der Transportbänder 3,4 und schweisst die sich in Bearbeitung befindliche Platine 40 im Bereich der Kanten 41,42, die durch einen - bedingt durch die Zuschnittstoleranz - vorhandenen minimalen Spalt 43 voneinander getrennt sind, allenfalls durch Zuführen von Zusatzdraht. Die Schweissoptik 7 hat sich von der Position bei Schweissnahtanfang OSA in Transportrichtung TR bewegt. Die beiden noch nicht geschweissten Platinen 30 sind für einen nachfolgenden Schweissprozess positioniert.

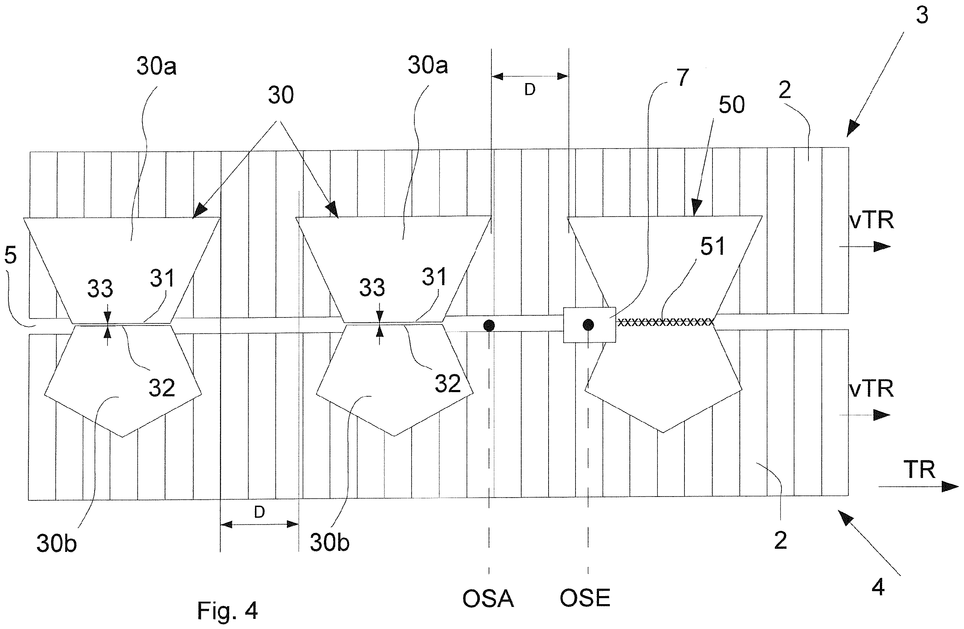

Die Fig. 4 zeigt in einer dritten Draufsicht das Ende des Schweissprozesses. Die geschweisste Platine ist mit der Scheissnaht 51 beaufschlagt und die Schweissoptik befindet sich nun in der Position bei Schweissnahtende OSE.

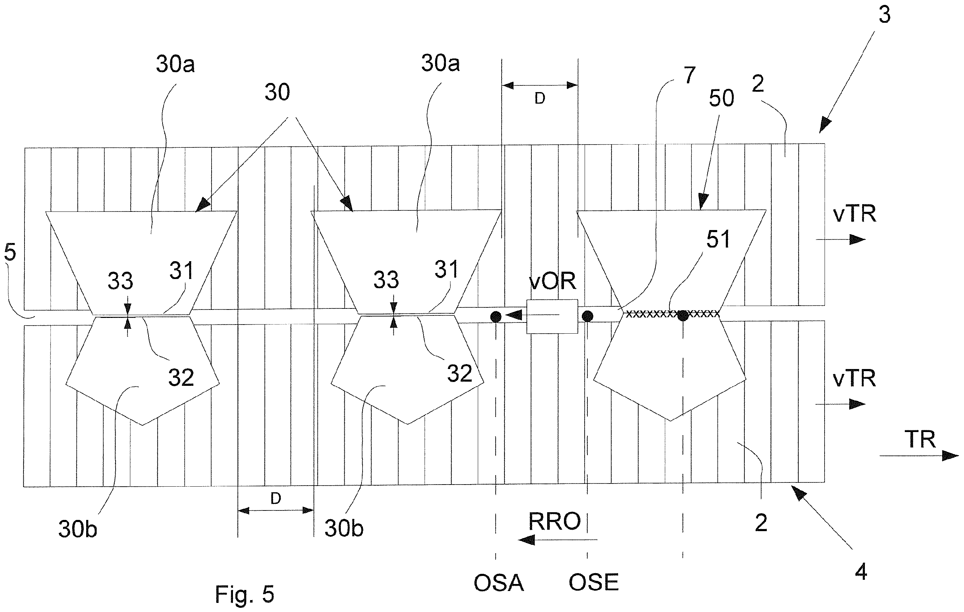

Die Fig. 5 zeigt in einer vierten Draufsicht die Rückfahrt der Schweissoptik 7. Nachdem die Schweissoptik 7 das Ende der Schweissposition OSE erreicht hat, bewegt sie sich nun mit der Geschwindigkeit V_{OR} , die einem Vielfachen der Transportgeschwindigkeit V_{TR} beträgt, in der zur Transportrichtung TR entgegengesetzten Richtung RRO bis sie die Anfangsposition OSA zum Schweissen der nächsten zu verschweissenden Platine 30 erreicht hat.

## Patentansprüche

1. Verfahren zum Transportieren und zum stumpfen Verschweissen von Blechen, insbesondere im Karosseriebau der Motorfahrzeugindustrie, bei welchem beliebig geformte flache Blechteile durch Zuführmittel (12) auf mindestens zwei sich mit einer konstanten Geschwindigkeit V_{TR} kontinuierlich in horizontaler Richtung TR bewegten Transportbänder (3,4) platziert werden, sodass jeweils zwei zu verschweissende Kanten (31,32) von zwei miteinander zu verschweissenden Einzelwerkstücken (30a,30b) unter Bildung eines möglichst geringen Spaltes stumpf aneinandergefügt werden und mit Haltemitteln (6) auf der in einzelne Segmente (2) unterteilten Oberfläche der Transportbänder (3,4) so fixiert werden, dass die Einzelwerkstücke über eine längere Strecke L in derselben Position gehalten werden, im weiteren mit in der Höhe und in Längsrichtung bewegbaren Mitteln (7) zum Laserschweissen und mit ortsfesten Mitteln (8,9,10) zur Überwachung der Nahtgeometrie vor dem Schweissen und zur Überwachung der Schweissnaht nach dem Schweissen, sowie mit Mitteln (13) für das Entfernen von geschweissten Platinen (50), **dadurch gekennzeichnet, dass** die mindestens eine Schweissoptik (7) beim Schweissen der zu verschweissenden Werkstücke (30a,30b) unter Bildung einer Schweissnaht (51) mit der Geschwindigkeit V_{OS}, die gleich der Geschwindigkeit V_{TR} der Transportbänder (3,4)reduziert um die Schweissgeschwindigkeit V_{S} ist, in der gleichen Richtung SRO wie die Transportrichtung TR bewegt wird, und dass die mindestens eine Schweissoptik (7), nach dem Verschweissen der beiden Einzelwerkstücke (30a,30b) zu einer geschweissten Platine (50), mit der Geschwindigkeit V_{OR}, die einem Vielfachen der Geschwindigkeit V_{TR} der Transportbänder (3,4) in der zur Transportrichtung TR entgegengesetzten Richtung SRO bis zum Anfangspunkt OSA der nächsten zu schweissenden Schweissnaht bewegt wird.

2. Verfahren nach Anspruch 1, **dadurch gekennzeichnet, dass** die Transportbänder (3,4) mit einem Kettenantrieb über das mindestens eine Antriebsritzel (1) angetrieben werden, wobei die einzelnen Segmente (2) der Transportbänder (3,4) als Polplatten ausgelegt sind.

3. Verfahren nach Anspruch 1, **dadurch gekennzeichnet, dass** die Haltemittel (6) als nicht bewegbare magnetische Haltemittel, vorzugsweise als Permanentmagnete oder als abschaltbare Permanentmagnete oder als Elektromagnete, oder als Vakuummodul ausgebildet sein können.

4. Verfahren nach den Ansprüchen 1 und 3, **dadurch gekennzeichnet, dass** zum Fixieren der zu verschweissenden Einzelwerkstücke (30a,30b) auf den Transportbändern (3,4) die Haltemittel (6) über eine ein- und abschaltbar ausgelegte Steuereinheit eingeschaltet und mit einem Strom beaufschlagt werden, wodurch ein magnetischer Fluss erzeugt wird, der über die Haltemittel (6) auf die Segmente (2) übertragen wird, und nach dem Schweissen zum Lösen der geschweissten Platine (50) durch Abschalten des Stromes der magnetische Fluss ausgeschaltet werden kann.

5. Verfahren nach Anspruch 4, **dadurch gekennzeichnet, dass** der magnetische Fluss über die Haltemittel (6) und die Segmente (2) und die metallischen Einzelwerkstücke (30a,30b) geschlossen ist, wodurch eine hohe Kraft F im Bereich von etwa 10 - 12 N/cm² so auf das Werkstück ausgeübt wird, dass das Werkstück (30a,30b,40,50) während dem transportieren einseitig von unten auf den Transportbändern (3,4) fixiert wird.

6. Verfahren nach einem der Ansprüche 1 bis 5, **dadurch gekennzeichnet, dass** durch das Spannen des Einzelwerkstückes (30a) ein magnetischer Fluss erzeugt wird der auf das Einzelwerkstück (30b) eine Magnetkraft ausübt, womit das Spaltschliessen zwischen den zu verschweissenden Einzelwerkstücken (30a,30b) erfolgt.

7. Verfahren nach Anspruch 1, **dadurch gekennzeichnet, dass** das Überwachen des Restspaltes zwischen den zu verschweissenden Einzelwerkstücken (30a,30b) mittels einer Kamera erfolgt und das Spaltschliessen des minimalen Spaltes (43) zwischen den zu verschweissenden Einzelwerkstücken (30a,30b) mittels Zuführen von Zusatzdraht zwischen den zu verschweissenden Einzelwerkstücken (30a,30b) erfolgt.

8. Verfahren nach Anspruch 1, **dadurch gekennzeichnet, dass** die Förderkette auch als Bandantrieb oder Shuttleantrieb ausgestaltet ist.

9. Anwendung des Verfahrens nach Anspruch 1 zur Herstellung von Tailored Blanks im Karosseriebau.

## Claims

1. Method for conveying and butt-welding sheet metal, in particular in the construction of motor vehicle bodies in the automotive industry, in which flat sheet metal parts of any desired shape are placed by supplying means (12) on at least two conveyor belts (3, 4) which are moved continuously in the horizontal direction TR with a constant speed V_{TR}, so that two respective edges to be welded (31, 32) of two individual workpieces (30a, 30b) to be welded together are butted together with formation of an as small as possible gap and fixed with holding means (6) on the surface of the conveyor belts (3, 4), divided into individual segments (2), such that the individual workpieces can be held in the same position over a long distance L, further with means (7) for laser welding, which are movable longitudinally and in height, and with stationary means (8, 9, 10) for monitoring the seam geometry before welding and for monitoring the weld seam after welding, as well as means (13) for removal of the welded blanks (50), **characterized in that**, during welding of the workpieces (30a, 30b) to be welded, the at least one welding lens (7) is moved with formation of a weld seam (51) with the speed V_{OS}, which is equal to the speed V_{TR} of the conveyor belts (3, 4) reduced by the welding speed V_{S}, in the same direction SRO as the conveying direction TR, and that, after welding of the two individual workpieces (30a, 30b) into a welded blank (50), the at least one welding lens (7) is moved with the speed V_{OR}, a multiple of the speed V_{TR} of the conveyor belts (3, 4), in the direction SRO opposite the conveying direction TR to the starting point OSA of the next weld seam to be welded.

2. Method according to claim 1, **characterized in that** the conveyor belts (3, 4) are driven by a chain drive via the at least one drive sprocket (1), wherein the individual segments (2) of the conveyor belts (3, 4) are designed as pole plates.

3. Method according to claim 1, **characterized in that** the holding means (6) may be formed as immobile magnetic holding means, preferable as permanent magnets or as switchable permanent magnets or as electromagnets, or as a vacuum module.

4. Method according to claims 1 and 3, **characterized in that**, for fixing the individual workpieces (30a, 30b) to be welded on the conveyor belts (3, 4), the holding means (6) are switched on via a control unit designed to be switched on and off and are supplied with current, whereby a magnetic flux is generated which is transmitted via the holding means (6) to the segments (2), and for removing the welded blank (50) after welding, the magnetic flux can be switched off by switching off the current.

5. Method according toclaim 4, **characterized in that** the magnetic flux is closed via the holding means (6) and the segments (2) and the metallic individual workpieces (30a, 30b), whereby a large force F in the range of approximately 10 - 12 N/cm2 is exerted on the workpiece such that during conveying the workpiece (30a, 30b, 40, 50) is fixed on one side from below on the conveyor belts (3, 4).

6. Method according to one of claims 1 to 5, **characterized in that**, through the tightening of the individual workpiece (30a), a magnetic flux is generated which exerts a magnetic force on the individual workpiece (30b), whereby the gap closure between the individual workpieces (30a, 30b) to be welded takes place.

7. Method according to claim 1, **characterized in that** the monitoring of the remaining gap between the individual workpieces (30a, 30b) to be welded occurs by means of a camera and the gap closure of the minimal gap (43) between the individual workpieces (30a, 30b) to be welded takes place by supplying filler wire between the individual workpieces (30a, 30b) to be welded.

8. Method according to claim 1, **characterized in that** the conveying chain is designed as well as a belt drive or shuttle drive.

9. Use of the method according to claim 1 for manufacturing tailored blanks in car body construction.

## Revendications

1. Procédé de transport et de soudage bout-à-bout des tôles métalliques, particulièrement dans la construction des corps de véhicules dans l'industrie automobile, au cours duquel des parties plates de tôles métalliques avec quelconque forme désirée sont placées par des moyens d'alimentation (12) sur au moins deux bandes transporteuses (3, 4) qui sont déplacées de manière continue dans la direction horizontale TR avec une vitesse constante V_{TR}, de sorte que deux bords respectifs à souder (31, 32) de deux pièces individuelles (30a, 30b) à souder l'une à l'autre sont aboutées ensembles, formant un écart le plus petit possible et fixées avec des moyens de soutien (6) sur la surface des bandes transporteuses (3, 4), divisées en segments individuels (2), de sorte que les pièces individuels peuvent être soutenues dans la même position le long d'une longue distance L, en outre avec des moyens (7) pour le soudage au laser, qui sont déplaçables horizontalement et en hauteur, et avec des moyens stationnaires (8, 9, 10) pour surveiller la géométrie de joint avant le soudage et pour surveiller le joint de soudage après le soudage, ainsi que des moyens (13) pour enlever les ébauches soudées (50), **caractérisé en ce que** pendant le soudage des pièces (30a, 30b) à souder l'au moins une lentille de soudage (7) est déplacée en formant un joint de soudage (51) avec la vitesse vos, qui est égale à la vitesse V_{TR} des bandes transporteuses (3, 4) réduite par la vitesse de soudage V_{S}, dans la même direction SRO comme la direction de transport TR, et **en ce qu'**après le soudage des deux pièces individuelles (30a, 30b) dans une ébauche soudée (50) l'au moins une lentille de soudage (7) est déplacée avec la vitesse V_{OR}, un multiple de la vitesse V_{TR} des bandes transporteuses (3, 4), dans la direction SRO opposée à la direction de transport TR au point de départ OSA du prochain joint de soudage à souder.

2. Procédé selon la revendication 1, **caractérisé en ce que** les bandes transporteuses (3, 4) sont entraînées par une transmission par chaîne par au moins un pignon moteur (1), les segments individuels (2) des bandes transporteuses (3, 4) étant conçus comme des plaques polaires.

3. Procédé selon la revendication 1, **caractérisé en ce que** des moyens de retenue (6) peuvent être formés comme des moyens de retenue magnétiques immobiles, préférablement comme des aimants permanents ou des aimants permanents commutables ou des électroaimants, ou comme un module à vide.

4. Procédé selon les revendications 1 et 3, **caractérisé en ce que**, afin de fixer les pièces individuelles (30a, 30b) à souder sur les bandes transporteuses (3, 4), les moyens de retenue (6) sont allumés par une unité de commande conçue à être allumée et éteinte et ils sont alimentés avec un courant, un flux magnétique étant généré, qui est transmis par l'intermédiaire des moyens de retenue (6) aux segments (2), et le flux magnétique peut être éteint en éteignant le courant afin d'enlever l'ébauche soudée (50) après le soudage.

5. Procédé selon la revendication 4, **caractérisé en ce que** le flux magnétique est fermé par les moyens de retenue (6) et les segments (2) et les pièces métalliques individuelles (30a, 30b), une grande force F comprise entre environ 10 et 12 N/cm2 étant exercée sur la pièce, de sorte que pendant le transport la pièce (30a, 30b, 40, 50) est fixée d'un côté de dessous sur les bandes transporteuses (3, 4).

6. Procédé selon l'une des revendications 1 à 5, **caractérisé en ce qu'**un flux magnétique est généré en serrant la pièce individuelle (30a), qui exerce une force magnétique sur la pièce individuelle (30b), la fermeture de l'écart étant effectuée entre les pièces individuelles (30a, 30b) à souder.

7. Procédé selon la revendication 1, **caractérisé en ce que** la surveillance de l'écart résiduel entre les pièces individuelles (30a, 30b) à souder est effectuée par une caméra et la fermeture de l'écart minimal (43) entre les pièces individuelles (30a, 30b) à souder est effectuée en alimentant du fil de remplissage entre les pièces individuelles (30a, 30b) à souder.

8. Procédé selon la revendication 1, **caractérisé en ce que** la chaîne transporteuse est conçue comme entraînement par courroie ou entraînement de la navette.

9. Utilisation du procédé selon la revendication 1 pour la fabrication des flancs sur mesure dans la construction de carrosserie.
